# EUROPEAN PATENT APPLICATION

(11) **EP 4 737 525 A1**
(43) Date of publication of application: **06.05.2026**
(21) Application number: 24306862.4
(22) Date of filing: 05.11.2024
(51) Int. Cl.: C09D 127/16, H01M 50/403, H01M 50/426, C08F 214/22, H01M 10/052

(54) **COMPOSITION IN POWDER FORM BASED ON FLUORINATED POLYMER**

(71) Applicant: ARKEMA FRANCE, 92800 Puteaux (FR)
(72) Inventor: BEAUME, François, 69490 PIERRE-BENITE (FR); FANG, Mingyuan, CHANGSHU (CN); PETERSON, Brian, KING OF PRUSSIA, 19406 (US); CHEUNG, Patricia, KING OF PRUSSIA, 19406 (US)
(74) Representative: Arkema Patent

(57) **Abstract**

The present invention relates to a composition, preferably in powder form, comprising a polymer **P1** comprising recurring units derived from vinylidene fluoride and recurring units derived from a monomer **M1** selected from the group consisting of vinylidene fluoride, hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)nCH₂OCF=CF₂ wherein n is 1, 2, 3, 4 or 5; a monomer of formula R¹CH₂OCF=CF₂ wherein R¹ is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluoromethyl-3,3,3-trifluoro-1-propene or mixture thereof; characterized in that the particles of said polymer **P1** have a Dv99 size distribution lower than 89 microns and a DvlO size distribution greater than 1.5 microns and in that said polymer **P1** has a melting temperature Tm greater than 163.04 - 1.9628*x ; wherein x is the weight content of said fluorinated monomer **M1** expressed as percent based on the total weight of said polymer **P1**; the melting temperature being measured by DSC according to the ASTM E794-06 (2018) standard test method.

## Description

### Technical field

The present invention relates generally to the field of electrical energy storage in rechargeable secondary batteries of Li-ion type. More specifically, the invention relates to a composition suitable for use as a coating in a separator.

### Background of the invention

The market for separators for electrochemical devices is dominated by the use of polyolefins (e.g. Celgard^{®} or Hipore^{®}) produced by extrusion and/or stretching via dry or wet processes. Separators must have low thicknesses, optimal affinity for the electrolyte and sufficient mechanical and temperature strength. Among the most interesting alternatives to polyolefins, polymers with a better affinity vis-à-vis standard electrolytes have been proposed, in order to reduce the internal resistances of the system, such as poly(methylmethacrylate) (PMMA), poly(vinylidene fluoride) (PVDF) and poly(vinylidene-hexafluoropropene-fluoride) (P(VDF-co-HFP)). Poly(vinylidene fluoride) (PVDF) and its derivatives are of interest as the main constituent material of the separator and also as a polyolefin separator coating, for their electrochemical stability, and for their high dielectric constant which promotes ion dissociation and therefore conductivity. Copolymer P(VDF-co-HFP) (copolymer of vinylidene fluoride (VDF) and hexafluoropropylene (HFP)) has a crystallinity lower than PVDF. Therefore, the interest of these copolymers of P (VDF-co-HFP) is that they promote conductivity. The main evaluation criteria for a separator coating are the adhesion and the ionic conductivity or the swelling.

Ionic conductivity represents the migration of Li ions through the separator and its coating, thanks to porosity. In the aqueous coating, this porosity corresponds to the interstices between the solid particles that make up the coating: polymer particles (from latex or powder redispersed in water) and / or ceramics. In the solvent coating, this porosity is created by the phase inversion (exposure to moisture of the acetone coating, for example) necessary before or during drying; Without phase reversal, a simple evaporation of the solvent forms a continuous non-porous coating. Gurley air permeability is used as an early indication of ion conduction. Beyond the air permeability of the initial coated separator, other aspects can affect ionic conductivity: the interaction with the electrolyte (favorable when a slight swelling of the polymer improves the wettability/affinity for the electrolyte, unfavorable when too much swelling of the polymer leads to reduce/clog the pores), the effect of pressing or lamination (reduces / clogs the pores).

Dry adhesion is measured after assembly, by pressing or lamination, of the separator coated with an electrode. This adhesion increases with temperature and pressure applied post-coating. However, it is desirable to use gentle pressing/laminating conditions: reduced pressure to avoid/limit pore closure and thus minimize the impact on ionic conductivity, moderate temperature to limit energy consumption and maintain high line speed/productivity.

There is always a need to develop new separator coatings that are easily implemented and have a good compromise between adhesion and low swelling. This is particularly the case for waterborne coatings prepared from polymer powder redispersed in water that are used for the preparation of a separator allowing good dry adhesion to the electrode at low pressing temperatures (including room temperature). Pressing at low temperatures during cell assembly has several advantages: temperature reached faster (line speed) and more quickly uniform in the thickness of the assembly (allows thicker assembly, line speed), reduced energy consumption.

The invention therefore aims to remedy at least one of the disadvantages of the prior art, namely to provide a polymeric coating for separator capable of preventing swelling or dissolution in one (s) electrolyte solvent, while maintaining good adhesion properties to the electrode at low pressing temperature.

### Summary of the invention

In a first aspect, the present invention provides a composition in powder form comprising a polymer **P1** comprising recurring units derived from vinylidene fluoride and recurring units derived from a monomer **M1** selected from the group consisting of vinylidene fluoride, hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)nCH₂OCF=CF₂ wherein n is 1, 2, 3, 4 or 5; a monomer of formula R¹CH₂OCF=CF₂ wherein R¹ is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluoromethyl-3,3,3-trifluoro-1-propene or mixture thereof; characterized in that the particles of said polymer **P1** have a Dv99 size distribution lower than 89 microns and a DvlO size distribution greater than 1.5 microns and in that said polymer **P1** has a melting temperature Tm greater than 163.04 - 1.9628*x ; wherein x is the weight content of said fluorinated monomer **M1** expressed as percent based on the total weight of said polymer **P1;** the melting temperature being measured by DSC according to the ASTM E794-06 (2018) standard test method. For example, when the weight content of said fluorinated monomer **M1** in the polymer **P1** is 10wt%, then x is 10 in the above-mentioned relationship.

The composition of the present invention allows a good compromise between dry adhesion at low pressing temperature and swelling. The applicant found that the selection of specific polymers having a particular particle size distribution and a melting temperature greater than the one of coatings generally used in separators allows to achieve the desired compromise between adhesion and swelling.

Preferably, said monomer **M1** is hexafluoropropylene.

Preferably, the mass content of said monomer **M1** in said polymer **P1** is between 1% and 16% based on the total weight of said polymer **P1.**

Preferably, said polymer **P1** has a melting temperature Tm greater than 164.04 - 1.9628*x, advantageously greater than 165.04 - 1.9628*x, preferably greater than 166.04 - 1.9628*x, in particular greater than 167.04 - 1.9628*x.

Preferably, the melt viscosity of said polymer **P1** ranges from 16 to 50 kP at 230°C and a shear rate of 100 s⁻¹ measured according to ASTM D3835.

Preferably, said polymer **P1** comprises a functional group selected from the group consisting of carboxylic acid, carboxylic acid anhydride, carboxylic acid esters, epoxy groups, amide, hydroxyl, carbonyl, mercapto, sulfide, oxazoline, phenolics, ester, ether, siloxane, sulfonic, sulfuric, phosphoric, or phosphonic.

Preferably, said polymer **P1** further comprises recurring units derived from a monomer **M2** of formula R¹R²C=C(R³)((X¹)ₚC(O)R⁴) wherein the substituents R¹, R² and R³ are independently selected from the group consisting of H, CO₂H et C₁-C₅ alkyl; R⁴ is selected from the group consisting of-NHC(CH₃)₂CH₂C(O)CH₃ and - OR⁵ wherein R⁵ is selected from the group consisting of H and C₁-C₁₈ alkyl optionally substituted by one or more functional groups -OH, -CO₂H, -SO₃H, -PO₃H, -OC(O)R⁶, -C(O)O-R⁶ or a heterocycle having five or six membered ring comprising at least one nitrogen atom in the backbone ; R⁶ being selected from the group consisting of C₁-C₆ alkyl and C₆-C₁₂ aryl optionally substituted by one or more functional groups -OH, -CO₂H, -SO₃H, -PO₃H ; p is 0 or 1; X¹ is selected from the group consisting of -[-C(O)OC(R⁷)(R⁸)C(R⁹)(R¹⁰)-]_{w1}- and C₁-C₁₀ alkyl optionally substituted by one or more functional groups -OH, -CO₂H or ester(s) ; w1 is an integer of from 1 to 50, advantageously from 1 to 25, preferably from 1 to 10, in particular from 1 to 5 ; R⁷, R⁸, R⁹, R¹⁰ are independently from each other and independently for each unit w1 selected from the group consisting of H and C₁-C₅ alkyl.

Preferably, the particles of said polymer **P1** have a distribution of size Dv90 lower than 50 microns.

Preferably, the mass ratio between the extractible and the content of said monomer **M1** in said polymer **P1,** both expressed as a percentage, is lower than 2.0.

Preferably, said polymer P1 is free of fluorosurfactants.

In another aspect, the present invention provides a separator comprising the composition according to the present invention.

Preferably, the separator comprises a porous support, a coating layer **CL** disposed on the support and an adhesive layer **AL** disposed on said coating layer **CL;** said adhesive layer **AL** being constituted of the composition according to the present invention.

In another aspect, the present invention provides a Li-ion secondary battery comprising an anode, a cathode and a separator, wherein said separator is according to the present invention.

### Detailed description of the invention

According to a first aspect, the present invention provides a composition in powder form comprising a polymer **P1.**

### Polymer P1

Said polymer **P1** may comprise recurring units derived from vinylidene fluoride.

Said polymer **P1** may comprise recurring units derived from a monomer **M1** copolymerizable with vinylidene fluoride. Comonomers compatible with vinylidene fluoride may be halogenated (fluorinated, chlorinated or brominated) or non-halogenated. Said monomer **M1** may be selected from the group consisting of vinylidene fluoride, hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)nCH₂OCF=CF₂ wherein n is 1, 2, 3, 4 or 5; a monomer of formula R¹CH₂OCF=CF₂ wherein R¹ is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluoromethyl-3,3,3-trifluoro-1-propene or mixture thereof. Among the trifluoropropenes mention may be mentioned 3,3,3-trifluoropropene. Among the tetrafluoropropenes include 2,3,3,3-tetrafluoropropene, 1,3,3,3-tetrafluoropropene. Among the pentafluoropropene include 1,1,3,3,3-pentafluoropropene or 1,2,3,3,3-pentafluoropropene. Chlorofluoroethylene may refer to either 1-chloro-1-fluoroethylene or 1-chloro-2-fluoroethylene. The isomer 1-chloro-1-fluoroethylene is preferred. Chlorotrifluoropropene is preferably 1-chloro-3,3,3-trifluoropropene or 2-chloro-3,3,3-trifluoropropene.

Advantageously, said monomer **M1** may be selected from the group consisting of vinyl fluoride, trifluoroethylene, chlorotrifluoroethylene, 1,2-difluoroethylene, tetrafluoroethylene, hexafluoropropylene, perfluoro(alkyl vinyl) ethers such as perfluoro(methyl vinyl)ether (PMVE), perfluoro(ethyl vinyl) ether (PEVE) and perfluoro(propyl vinyl) ether (PPVE); perfluoro(1,3-dioxole) perfluoro(2,2-dimethyl-1,3-dioxole) (PDD), perfluorobutyl ethylene (PFBE), trifluoropropene, tetrafluoropropene, hexafluoroisobutylene, perfluorobutylethylene, pentafluoropropene, bromotrifluoroethylene, chlorofluoroethylene, chlorotrifluoropropene and 2-trifluoromethyl-3,3,3-trifluoro-1-propene or a mixture thereof.

Preferably, said monomer **M1** may be selected from the group consisting of vinyl fluoride, trifluoroethylene, chlorotrifluoroethylene, 1,2-difluoroethylene, tetrafluoroethylene, hexafluoropropylene, perfluoro(alkyl vinyl) ethers such as perfluoro(methyl vinyl)ether (PMVE), perfluoro(ethyl vinyl) ether (PEVE) and perfluoro(propyl vinyl) ether (PPVE); perfluorobutyl ethylene (PFBE), trifluoropropene, tetrafluoropropene, hexafluoroisobutylene, perfluorobutylethylene, pentafluoropropene, bromotrifluoroethylene, chlorofluoroethylene and chlorotrifluoropropene or a mixture thereof.

More preferably, said monomer **M1** may be selected from the group consisting of vinyl fluoride, trifluoroethylene, chlorotrifluoroethylene, 1,2-difluoroethylene, tetrafluoroethylene, hexafluoropropylene, perfluoro (methyl vinyl) ether, perfluoro (ethyl vinyl) ether, perfluoro (propyl vinyl) ether, perfluorobutyl ethylene, trifluoropropene, tetrafluoropropene, hexafluoroisobutylene, perfluorobutylethylene, pentafluoropropene, bromotrifluoroethylene, chlorofluoroethylene and chlorotrifluoropropene or a mixture thereof.

In particular, said monomer **M1** may be selected from the group consisting of vinyl fluoride, trifluoroethylene, chlorotrifluoroethylene, 1,2-difluoroethylene, tetrafluoroethylene and hexafluoropropylene or a mixture thereof. More particularly, said monomer **M1** is hexafluoropropylene.

According to one embodiment, in said polymer **P1,** the mass content of units derived from vinylidene fluoride is preferably at least 50%, preferably at least 60%, more preferably greater than 70% and particularly greater than 80% based on the total weight of said polymer **P1.** Thus, the mass content of said monomer **M1** in said polymer **P1** is lower than 50%, preferably lower than 40%, preferably lower than 30%, more preferably lower than 20% based on the total weight of said polymer **P1.** According to a preferred embodiment, the mass content of said monomer **M1** in said polymer **P1** is between 0.5% and 20%, advantageously between 0.5% and 19%, preferably between 0.5% and 18%, more preferably between 0.5% and 17%, in particular between 0.5% and 16%, more particularly between 0.5% and 15% based on the total weight of said polymer **P1.** The mass content of said monomer **M1** in said polymer **P1** may also be between 1% and 20%, advantageously between 1% and 19%, preferably between 1% and 18%, more preferably between 1% and 17%, most preferably between 1% and 16%, in particular between 1% and 15%, more particularly between 1% and 13%, most particularly between 1% and 11% based on the total weight of said polymer **P1.** The mass content of said monomer **M1** in said polymer **P1** may also be between 2% and 20%, advantageously between 2% and 19%, preferably between 2% and 18%, more preferably between 2% and 17%, most preferably between 2% and 16%, in particular between 2% and 15%, more particularly between 2% and 13%, most particularly between 2% and 11% based on the total weight of said polymer **P1.** The mass content of said monomer **M1** in said polymer **P1** may also be between 3% and 20%, advantageously between 3% and 19%, preferably between 3% and 18%, more preferably between 3% and 17%, most preferably between 3% and 16%, in particular between 3% and 15%, more particularly between 3% and 13%, most particularly between 3% and 11% based on the total weight of said polymer **P1.** The mass content of said monomer **M1** in said polymer **P1** may also be between 4% and 20%, advantageously between 4% and 19%, preferably between 4% and 18%, more preferably between 4% and 17%, most preferably between 4% and 16%, in particular between 4% and 15%, more particularly between 4% and 13%, most particularly between 4% and 11% based on the total weight of said polymer **P1.**

According to a preferred embodiment, said polymer **P1** comprises recurring units derived from vinylidene fluoride and recurring units derived from hexafluoropropylene; preferably the mass content of recurring units from vinylidene fluoride is at least 50%, preferably at least 60%, more preferably at least 70% and preferably at least 80% based on the total weight of said polymer **P1.** More particularly, said polymer **P1** comprises recurring units derived from vinylidene fluoride and recurring units derived from hexafluoropropylene; the mass content of vinylidene fluoride units is more than 65% and the mass content of hexafluoropropylene units is lower than 35%. Preferably, the polymer **P1** comprises recurring units derived from vinylidene fluoride and recurring units derived from hexafluoropropylene; The mass content of vinylidene fluoride units is greater than 85% and the mass content of hexafluoropropylene units is lower than 15%.

According to a particular embodiment, the polymer **P1** comprises recurring units derived from vinylidene fluoride and recurring units from hexafluoropropylene; the mass content of hexafluoropropylene is between 0.5% and 20%, advantageously between 0.5% and 19%, preferably between 0.5% and 18%, more preferably between 0.5% and 17%, in particular between 0.5% and 16%, more particularly between 0.5% and 15% based on the total weight of said polymer **P1.** Advantageously, the polymer **P1** comprises recurring units derived from vinylidene fluoride and recurring units derived from hexafluoropropylene; the mass content of hexafluoropropylene is between 1% and 20%, advantageously between 1% and 19%, preferably between 1% and 18%, more preferably between 1% and 17%, most preferably between 1% and 16%, in particular between 1% and 15%, more particularly between 1% and 13%, most particularly between 1% and 11% based on the total weight of said polymer **P1.** Preferably, the polymer **P1** comprises recurring units derived from vinylidene fluoride and recurring units derived from hexafluoropropylene; the mass content of hexafluoropropylene is between 2% and 20%, advantageously between 2% and 19%, preferably between 2% and 18%, more preferably between 2% and 17%, most preferably between 2% and 16%, in particular between 2% and 15%, more particularly between 2% and 13%, most particularly between 2% and 11% based on the total weight of said polymer **P1.** More preferably, the polymer **P1** comprises recurring units derived from vinylidene fluoride and recurring units derived from hexafluoropropylene; the mass content of hexafluoropropylene is between 3% and 20%, advantageously between 3% and 19%, preferably between 3% and 18%, more preferably between 3% and 17%, most preferably between 3% and 16%, in particular between 3% and 15%, more particularly between 3% and 13%, most particularly between 3% and 11% based on the total weight of said polymer **P1.** Most preferably, the polymer **P1** comprises recurring units derived from vinylidene fluoride and recurring units derived from hexafluoropropylene; the mass content of hexafluoropropylene is between 4% and 20%, advantageously between 4% and 19%, preferably between 4% and 18%, more preferably between 4% and 17%, most preferably between 4% and 16%, in particular between 4% and 15%, more particularly between 4% and 13%, most particularly between 4% and 11% based on the total weight of said polymer **P1.** In these embodiments, the mass content of vinylidene fluoride units is preferably at least 50%, preferably at least 60%, more preferably greater than 70% and particularly greater than 80 % based on the total weight of said polymer **P1.**

Alternatively, said polymer **P1** may be a copolymer of trifluoroethylene and vinylidene fluoride, a copolymer of vinylidene fluoride and tetrafluoroethylene, a copolymer of vinylidene fluoride and chlorotrifluoroethylene, a terpolymer of vinylidene fluoride, chlorotrifluoroethylene and tetrafluoroethylene, a terpolymer of vinylidene fluoride, chlorotrifluoroethylene and trifluoroethylene, a terpolymer of vinylidene fluoride, trifluoroethylene and hexafluoropropene, a terpolymer of vinylidene fluoride, tetrafluoroethylene and 1,1-chlorofluoroethylene or a terpolymer of vinylidene fluoride, hexafluoropropene and tetrafluoroethylene. In these polymers **P1,** the molar content of vinylidene fluoride may be at least 10 mol%, advantageously at least 20 mol%, preferably at least 30 mol%, more preferably at least 40 mol%, especially at least 50 mol%, especially at least 55 mol%. Preferably, the molar content of vinylidene fluoride can be between 55 and 99 mol%, advantageously between 55 and 95 mol%, preferably between 60 and 90 mol%.

The molar content of trifluoroethylene may be at least 1 mol%, advantageously at least 5 mol%, preferably at least 7 mol%, more preferably at least 10 mol%, most preferably at least 12 mol%, in particular at least 15 mol%. Preferably, the molar content of trifluoroethylene can be between 15 and 50%, advantageously between 17 and 45 mol%, preferably between 20 and 40 mol%, more preferably between 20 and 35 mol%, most preferably between 20 and 30 mol%. The molar content of chlorotrifluoroethylene may be at least 0.5 mol%, advantageously at least 1 mol%, preferably at least 2 mol%, more preferably at least 3 mol%, in particular at least 4 mol%, more particularly at least 5 mol%. Preferably, the molar content of chlorotrifluoroethylene can be between 1 and 20%, advantageously between 2 and 17 mol%, preferably between 3 and 15 mol%, more preferably between 4 and 15 mol%, most preferably between 5 and 12 mol%. The molar content of tetrafluoroethylene may be at least 1 mol%, advantageously at least 5 mol%, preferably at least 7 mol%, more preferably at least 10 mol%, in particular at least 15 mol%, more particularly at least 20 mol%. Preferably, the molar content of tetrafluoroethylene can be between 1 and 60%, advantageously between 2 and 55 mol, preferably between 5 and 50 mol%, more preferably between 7 and 45 mol%, most preferably between 10 and 40 mol%. The molar content of 1,1-chlorofluoroethylene may be at least 0.5 mol%, advantageously at least 1 mol%, preferably at least 2 mol%, more preferably at least 3 mol%, most preferably at least 4 mol%, in particular at least 5 mol%. Preferably, the molar content of 1,1-chlorofluoroethylene can be between 1 and 20%, advantageously between 2 and 17 mol%, preferably between 3 and 15 mol%, more preferably between 4 and 15 mol%, most preferably between 5 and 12 mol%. In a copolymer of vinylidene fluoride and trifluoroethylene, the molar content of vinylidene fluoride can be between 60 and 99 mol%, advantageously between 65 and 95 mol%, preferably between 65 and 90 mol%, more preferably between 68 and 85 mol%, in particular between 70 and 82 mol%, more particularly between 73 and 82 mol%; and the molar content of trifluoroethylene can be between 1 and 40 mol%, advantageously between 5 and 35 mol%, preferably between 10 and 35 mol%, more preferably between 15 and 32 mol%, in particular between 18 and 30 mol%, more particularly between 18 and 27 mol%.

In a copolymer of vinylidene fluoride and tetrafluoroethylene, the molar content of vinylidene fluoride can be between 40 and 99 mol%, advantageously between 45 and 95 mol%, preferably between 50 and 90 mol%, more preferably between 55 and 85 mol%; and the molar content of tetrafluoroethylene can be between 1 and 60 mol%, advantageously between 5 and 55 mol, preferably between 10 and 50 mol%, more preferably between 15 and 45 mol%.

In a copolymer of vinylidene fluoride and chlorotrifluoroethylene, the molar content of vinylidene fluoride can be between 60 and 99 mol%, advantageously between 65 and 98 mol%, preferably between 65 and 97 mol%, more preferentially between 70 and 96 mol%, in particular between 75 and 95 mol%; and the molar content of trifluoroethylene can be between 1 and 40 mol%, advantageously between 2 and 35 mol%, preferably between 3 and 35 mol%, more preferentially between 4 and 30 mol%, especially between 5 and 25 mol%.

In a terpolymer of vinylidene fluoride, chlorotrifluoroethylene and tetrafluoroethylene, the molar content of vinylidene fluoride can be between 20 and 98 mol%, advantageously between 35 and 90 mol%, preferably between 50 and 90 mol%; and the molar content of tetrafluoroethylene can be between 1 and 50 mol%, advantageously between 5 and 50 mol%, preferably between 5 and 40 mol%; and the molar content of chlorotrifluoroethylene can be between 1 and 30 mol%, advantageously between 1 and 15 mol%, preferably between 1 and 12 mol%.

In a terpolymer of vinylidene fluoride, chlorotrifluoroethylene and trifluoroethylene, the molar content of vinylidene fluoride can be between 20 and 98 mol%, advantageously between 35 and 90 mol%, preferably between 50 and 90 mol%; and the molar content of trifluoroethylene can be between 1 and 50 mol%, advantageously between 5 and 50 mol%, preferably between 5 and 40 mol%; and the molar content of chlorotrifluoroethylene can be between 1 and 30 mol%, advantageously between 1 and 15 mol%, preferably between 1 and 12 mol%.

In a terpolymer of vinylidene fluoride, trifluoroethylene and hexafluoropropene, the molar content of vinylidene fluoride can be between 20 and 98 mol%, advantageously between 35 and 90 mol%, preferably between 50 and 90 mol%; and the molar content of trifluoroethylene can be between 1 and 50 mol%, advantageously between 5 and 50 mol%, preferably between 5 and 40 mol%; and the molar content of hexafluoropropene can be between 1 and 30 mol%, advantageously between 1 and 15 mol%, preferably between 1 and 12 mol%.

In a terpolymer of vinylidene fluoride, tetrafluoroethylene and 1,1-chlorofluoroethylene, the molar content of vinylidene fluoride can be between 20 and 98 mol%, advantageously between 35 and 90 mol%, preferably between 50 and 90 mol%; and the molar content of tetrafluoroethylene can be between 1 and 50 mol%, advantageously between 5 and 50 mol%, preferably between 5 and 40 mol%; and the molar content of 1,1-difluoroethylene can be between 1 and 30 mol%, advantageously between 1 and 15 mol%, preferably between 1 and 12 mol%.

In a terpolymer of vinylidene fluoride, trifluoroethylene and 1,1-chlorofluoroethylene, the molar content of vinylidene fluoride can be between 20 and 98 mol%, advantageously between 35 and 90 mol%, preferably between 50 and 90 mol%; and the molar content of trifluoroethylene can be between 1 and 50 mol%, advantageously between 5 and 50 mol%, preferably between 5 and 40 mol%; and the molar content of 1,1-chlorofluoroethylene can be between 1 and 30 mol%, advantageously between 2 and 15 mol%, preferably between 4 and 12 mol%.

In a terpolymer of vinylidene fluoride, hexafluoropropene and tetrafluoroethylene, the molar content of vinylidene fluoride can be between 20 and 98 mol%, advantageously between 35 and 90 mol%, preferably between 50 and 90 mol%; and the molar content of tetrafluoroethylene can be between 1 and 50 mol%, advantageously between 5 and 50 mol%, preferably between 5 and 40 mol%; and the molar content of hexafluoropropene can be between 1 and 30 mol%, advantageously between 1 and 15 mol%, preferably between 1 and 12 mol%.

Said polymer **P1** may further comprise, in addition to recurring units derived from said monomer **M1,** recurring units derived from a monomer **M2.** Preferably, said monomer **M2** may be present in a content of 0.05% by weight to 5% by weight, in particular from 0.05 to 2% based on the total weight of said polymer **P1.**

Said monomer **M2** of formula R¹R²C=C(R³)((X¹)ₚC(O)R⁴) wherein the substituents R¹, R² et R³ are independently selected from the group consisting of H, CO₂H et C₁-C₅ alkyl ; R⁴ is selected from the group consisting of -NHC(CH₃)₂CH₂C(O)CH₃ and -OR⁵ wherein R⁵ is selected from the group consisting of H and C₁-C₁₈ alkyl optionally substituted by one or more functional groups -OH, -CO₂H, -SO₃H, -PO₃H, -OC(O)R⁶, -C(O)OR⁶ or a heterocycle having five or six membered ring comprising at least one nitrogen atom in the backbone ; R⁶ being selected from the group consisting of C₁-C₆ alkyl and C₆-C₁₂ aryl optionally substituted by one or more functional groups -OH, -CO₂H, -SO₃H, -PO₃H ; p is 0 or 1; X¹ is selected from the group consisting of -[-C(O)OC(R⁷)(R⁸)C(R⁹)(R¹⁰)-]_{w1}- and C₁-C₁₀ alkyl optionally substituted by one or more functional groups -OH, - CO₂H or ester(s) ; w1 is an integer of from 1 to 50, advantageously from 1 to 25, preferably from 1 to 10, in particular from 1 to 5 ; R⁷, R⁸, R⁹, R¹⁰ are independently from each other and independently for each unit w1 selected from the group consisting of H and C₁-C₅ alkyl.

Said heterocycle can be saturated or unsaturated or aromatic. Said heterocycle can be monocyclic or bicyclic. Said heterocycle can be a pyrrole, pyrrolidine, pyridine, piperidine, pyrimidine, pyrazine, 1,4-dihydropyridine, indole, oxindole, isatine, quinoline, isoquinoline, quinazoline, imidazoline, pyrazolidine, 2-pyrrolidone, deltalactam, succinimide, 2-imidazolidinone, 4-imidazolidinone. Said heterocycle can be substituted by one or more C₁-C₅ alkyl groups. As mentioned above, C₁-C₁₈ alkyl group is optionally substituted by said heterocycle. The latter can be linked to the alkyl chain by the nitrogen atom or any other atom forming the heterocycle. Preferably the heterocycle is 2-pyrrolidone, delta-lactam, succinimide, 2-imidazolidinone, 4-imidazolidinone. Said monomer **M2** may be of formula R¹R²C=C(R³)((X¹)ₚC(O)R⁴) wherein the substituents R¹, R² and R³ are independently selected from the group consisting of H, CO₂H and C₁-C₅ alkyl; R⁴ is -OR⁵ wherein R⁵ is selected from the group consisting of H and C₁-C₁₅ alkyl optionally substituted by one or more functional groups -OH, -CO₂H, -SO₃H, -PO₃H, -OC(O)R⁶, or -C(O)O-R⁶ ; R⁶ being selected from the group consisting of C₁-C₆ alkyl or C₆-C₁₂ aryl optionally substituted by one or more functional groups -OH, -CO₂H, -SO₃H, -PO₃H ; p is 0 or 1; X¹ is selected from the group consisting of -[-C(O)OC(R⁷)(R⁸)C(R⁹)(R¹⁰)-]_{w1}- and C₁-C₁₀ alkyl optionally bearing one or more functional groups -OH, -CO₂H or ester(s) ; with w1 being an integer of from 1 to 50, advantageously of from 1 to 25, preferably of from 1 to 10, in particular of from 1 to 5; R⁷, R⁸, R⁹, R¹⁰ are independently from each other and independently for each unit w1, selected from the group consisting of H and C₁-C₅ alkyl. Preferably, said monomer **M2** may be of formula R¹R²C=C(R³)((X¹)ₚC(O)R⁴) wherein the substituents R¹, R² and R³ are independently selected from the group consisting of H, CO₂H and C₁-C₅ alkyl; R⁴ is -OR⁵ with R⁵ selected from the group consisting of H and C₁-C₁₀ alkyl optionally substituted by one or more functional groups -OH, -CO₂H, -SO₃H, -PO₃H, -OC(O)R⁶, or -C(O)O-R⁶ ; R⁶ being selected from the group consisting of C₁-C₆ alkyl or C₆-C₁₂ aryl optionally substituted by one or more functional groups -OH, -CO₂H, - SO₃H, -PO₃H ; p is 0 or 1; X¹ is selected from the group consisting of -[-C(O)OC(R⁷)(R⁸)C(R⁹)(R¹⁰)-]_{w1}- and C₁-C₁₀ alkyl optionally bearing one or more functional groups -OH, -CO₂H or ester(s) ; with w1 being an integer of from 1 to 50, advantageously of from 1 to 25, preferably of from 1 to 10, in particular of from 1 to 5 ; R⁷, R⁸, R⁹, R¹⁰ are independently from each other and independently for each unit w1, selected from the group consisting of H and C₁-C₅ alkyl. More preferably, said monomer **M2** may be of formula R¹R²C=C(R³)(C(O)R⁴) wherein the substituents R¹, R² and R³ are independently selected from the group consisting of H, CO₂H et C₁-C₅ alkyl; R⁴ is -OR⁵ with R⁵ selected from the group consisting of H and C₁-C₁₀ alkyl optionally substituted by one or more functional groups -OH, -CO₂H, -SO₃H, -PO₃H, -OC(O)R⁶, or -C(O)O-R⁶ ; R⁶ being selected from the group consisting of C₁-C₆ alkyl or C₆-C₁₂ aryl optionally substituted by one or more functional groups -OH, -CO₂H, -SO₃H, -PO₃H. In particular, said monomer **M2** may be of formula R¹R²C=C(R³)(C(O)R⁴) wherein the substituents R¹, R² and R³ are independently selected from the group consisting of H, CO₂H et C₁-C₃ alkyl; R⁴ is -OR⁵ with R⁵ selected from the group consisting of H and C₁-C₅ alkyl optionally substituted by one or more functional groups -OH, -CO₂H, -SO₃H, -PO₃H, -OC(O)R⁶, or -C(O)O-R⁶ ; R⁶ being selected from the group consisting of C₁-C₆ alkyl or C₆-C₁₂ aryl optionally substituted by one or more functional groups -OH, -CO₂H, - SO₃H, -PO₃H. More particularly, said monomer **M2** may be acrylic acid, methyl acrylate, ethyl acrylate, propyl acrylate, n-butyl acrylate, isobutyl acrylate, t-butyl acrylate, n-dodecyl acrylate, amyl acrylate, isoamyl acrylate, hexyl acrylate, 2-ethylhexyl acrylate, diacetone acrylamide, lauryl acrylate, n-octyl acrylate, hydroxypropyl methacrylate, hydroxybutyl methacrylate, hydroxyethyl methacrylate, hydroxyethyl acrylate, acrylate hydroxypropyl acrylate, hydroxybutyl acrylate, methyl acrylic acid, methyl methacrylate, ethyl methacrylate, propyl methacrylate, n-butyl methacrylate, isobutyl methacrylate, t-butyl methacrylate, n-dodecyl methacrylate, amyl methacrylate, isoamyl methacrylate, hexyl methacrylate, 2-ethylhexyl methacrylate, lauryl methacrylate, n-octyl methacrylate, ureido methacrylate, monomers of formula CH₂=CH(CO₂CH₂CH₂CO₂H), CH₂=CH(CO₂CH₂CH₂-O-C(O)-CH₂CH₂CO₂H), CH₂=CH(CO₂CH₂CH₂CH₂-O-C(O)-CH₂CH₂CO₂H), CH₂=CH(CO₂CH(CH₃)CH₂-O-C(O)-CH₂CH₂CO₂H),CH₂=CH(CO₂CH₂CH₂-O-C(O)-C₆H₄CO₂H), CH₂=CH(CO₂CH₂CH₂CH₂CH(CO₂H)CH₂CH₂CO₂H) ; and mixtures thereof. Said polymer P1 may comprise one r more recurring units derived from said monomer **M2** as defined herein.

In a particular embodiment, said polymer **P1** comprises recurring units derived from vinylidene fluoride, recurring units derived from monomer **M1,** and recurring units derived from said monomer **M2;** said monomer **M1** and **M2** being as defined above. For example, said polymer **P1** may comprise recurring units derived from vinylidene fluoride, recurring units derived from said monomer **M1** being hexafluoropropylene and recurring units derived from said monomer **M2** being selected from the group consisting of acrylic acid, methyl acrylate, ethyl acrylate, propyl acrylate, hydroxypropyl methacrylate, hydroxyethyl methacrylate, hydroxyethyl acrylate, hydroxypropyl acrylate, methyl acrylic acid, methyl methacrylate, ethyl methacrylate, propyl methacrylate, monomers of formula CH₂=CH(CO₂CH₂CH₂CO₂H), CH₂=CH(CO₂CH₂CH₂-O-C(O)-CH₂CH₂CO₂H), CH₂=CH(CO₂CH₂CH₂CH₂-O-C(O)-CH₂CH₂CO₂H), CH₂=CH(CO₂CH(CH₃)CH₂-O-C(O)-CH₂CH₂CO₂H),CH₂=CH(CO₂CH₂CH₂-O-C(O)-C_{S}H₄CO₂H), CH₂=CH(CO₂CH₂CH₂CH₂CH(CO₂H)CH₂CH₂CO₂H); and mixtures thereof.

Said polymer **P1** may comprise a functional group selected from the group consisting of carboxylic acid, carboxylic acid anhydride, carboxylic acid esters, epoxy groups, amide, hydroxyl, carbonyl, mercapto, sulfide, oxazoline, phenolics, ester, ether, siloxane, sulfonic, sulfuric, phosphoric, or phosphonic; preferably selected from the group consisting of carboxylic acid, carboxylic acid anhydride, carboxylic acid esters, epoxy groups, hydroxyl, carbonyl, mercapto, sulfide, ester, ether, sulfonic, phosphoric or phosphonic. Functional groups may improve adhesion on metal. The functional group may be introduced within the polymer chain by grafting or copolymerization with a monomer (for example with monomer **M2** as disclosed above). According to another embodiment, the functional group may be introduced within the polymer chain via a chain transfer agent used during the polymerization process. The chain transfer agent may be a polymer with a molecular weight lower than or equal to 20000 g/mol and bearing functional groups selected from the group consisting of: carboxylic acid, carboxylic acid anhydride, carboxylic acid esters, epoxy groups (such as glycidyl), amide, hydroxyl, carbonyl, mercapto, sulfide, sulfide, oxazoline, phenolics, ester, ether, siloxane, sulfonic, sulfuric, phosphoric, phosphonic. An example of such chain transfer agent is acrylic acid oligomers. According to a preferred embodiment, the chain transfer agent is an acrylic acid oligomer with a molecular weight lower than or equal to 20000 g/mol. Alternatively, the functional group may be introduced by an oligomeric or polymeric component comprising said functional group and mixed with the polymer **P1.** The oligomeric or polymeric component may be impregnated in, mixed with, or intimately mixed with the polymer **P1.** In this case, the functional group may be derived from a (meth)acrylic acid compound selected from acrylic acid, methacrylic acid, methyl (meth)acrylate, ethyl (meth)acrylate, hydroxyethyl(meth)acrylate, hydroxypropyl(meth)acrylate, hydroxybutyl(meth)acrylate, hydroxyethylhexyl(meth)acrylate, and acryloyloxy propylsuccinate. For example, the functional group may be an oligomer or polymer comprising repeating units from a monomer selected from the group consisting of acrylic acid, methacrylic acid, methyl (meth)acrylate, ethyl (meth)acrylate, hydroxyethyl(meth)acrylate, hydroxypropyl(meth)acrylate, hydroxybutyl(meth)acrylate, hydroxyethylhexyl(meth)acrylate, acryloyloxyethylsuccinate, and acryloyloxy propylsuccinate. Said oligomer or polymer has an average molecular weight by weight lower than or equal to 100000 g/mol, advantageously lower than 80000 g/mol, preferably lower than 60000 g/mol, more preferentially lower than 40000 g/mol, in particular lower than 20000 g/mol. The average molecular weight is determined by GPC using a Waters 2695e device coupled with a Wyatt NEON refractometer equipped with two PL Gel mixed C columns and a guard column (7.8 mm I.D. × 30 cm, 5 µm) under the following conditions: Temperature: 35°C; Flow rate: 1.0 mL/min; injection volume: 100 µL. Samples are prepared at a concentration of 1 mg/ml in THF. Twelve samples of poly(methylmethacrylate) with a molecular weight of 535 to 2,210,000 g/mol are used as the calibration standard. Said oligomer or polymer is preferably added during the production process of the polymer **P1.** The content in functional groups content is at least 0.01% molar, preferably at least 0.1% molar, and not more than 15% molar, preferably not more than 10% molar.

Said polymer **P1** of the present invention can be obtained by known polymerization methods for example emulsion or suspension polymerization. According to a preferred embodiment, said polymer **P1** is prepared by an emulsion polymerization process in the presence of a non-fluorinated surfactant. Thus, said polymer **P1** may comprise between 10 ppm and 2% by weight of a non-fluorinated surfactant comprising polyethylene glycol or polypropylene glycol segments. Preferably, the non-fluorinated surfactant has an HLB value of 1 to 20, in particular an HLB value of 1 to 5 or 10 to 15. In particular, the non-fluorinated surfactant comprises at least one polyethylene glycol segment and at least one polypropylene glycol segment, and has an HLB value of 1 to 5 and an average molecular weight by weight of 5000 to 10000 g.mol-1. Alternatively, said surfactant comprises at least one segment of polyethylene glycol and at least one segment of polypropylene glycol, and has an HLB value of 10 to 15 and an average molecular weight by weight of 500 to 2500 g.mol-1. According to a preferred embodiment, said polymer **P1** is prepared by a suspension polymerization process, preferably in the presence of a suspending such as polyvinyl alcohol (PVA) or a compound with a cellulose moiety such as methylcellulose, hydroxypropyl methylcellulose, carboxymethylcellulose.

As mentioned above, said polymer **P1** has a particular particle size distribution. This allows to achieve the desired properties and to obtain a good compromise between adhesion and swelling.

Thus, said polymer **P1** has a Dv99 particle size distribution lower than 89 µm. Dv99 is the particle size at the 99th percentile (by volume) of the cumulative particle size distribution. This parameter can be determined according to the method disclosed in the present application. This applies to all Dv99s described in the present application. Advantageously, said polymer **P1** has a particle size distribution Dv99 lower than or equal to 85 µm, preferably lower than or equal to 80 µm, more preferably lower than or equal to 75 µm, most preferably lower than or equal to 70 µm, in particular lower than or equal to 65 µm, more particularly lower than or equal to 60 µm, most particularly lower than or equal to 55 µm, in a privileged manner lower than or equal to 50 µm, in a preferred privileged manner lower than or equal to 45 µm.

Said polymer **P1** may have a particle size distribution Dv99 greater than or equal to 5 µm, preferably greater than or equal to 7 µm, more preferably greater than or equal to 9 µm, most preferably greater than or equal to 11 µm, in particular greater than or equal to 13 µm, more particularly greater than or equal to 15 µm, most particularly greater than or equal to 17 µm, in a privileged manner greater than or equal to 19 µm, in a preferred privileged manner greater than or equal to 20 µm, in a particular privileged manner greater than or equal to 24 µm.

Said polymer **P1** may have a particle size distribution Dv99 lower than or equal to 89 µm, advantageously lower than or equal to 85 µm, preferably lower than or equal to 80 µm, more preferably lower than or equal to 75 µm, most preferably lower than or equal to 70 µm, in particular lower than or equal to 65 µm, more particularly lower than or equal to 60 µm, most particularly lower than or equal to 55 µm, in a privileged manner lower than or equal to 50 µm, in a preferred privileged manner lower than or equal to 45 µm; and said polymer **P1** may have a particle size distribution Dv99 greater than or equal to 5 µm, preferably greater than or equal to 7 µm, more preferably greater than or equal to 9 µm, most preferably greater than or equal to 11 µm, in particular greater than or equal to 13 µm, more particularly greater than or equal to 15 µm, most particularly greater than or equal to 17 µm, in a privileged manner greater than or equal to 19 µm, in a preferred privileged manner greater than or equal to 20 µm, in a particular privileged manner greater than or equal to 24 µm.

Said polymer **P1** may also have a DvlO particle size distribution greater than or equal to 1.5 µm. DvlO is the particle size at the 10th percentile (by volume) of the cumulative particle size distribution. This parameter can be determined according to the method disclosed in the present application. This applies to all Dv10s described in the present application. Said polymer **P1** may have a particle size distribution DvlO greater than or equal to 1.6 µm, advantageously greater than or equal to 1.7 µm, preferably greater than or equal to 1.8 µm, more preferably greater than or equal to 1.9 µm, most preferably greater than or equal to 2.0 µm. Said polymer **P1** may have a particle size distribution DvlO greater than or equal to 2.1 µm, advantageously greater than or equal to 2.2 µm, preferably greater than or equal to 2.3 µm, more preferably greater than or equal to 2.4 µm, most preferably greater than or equal to 2.5 µm, in particular greater than or equal to 2.6 µm, more particularly greater than or equal to 2.7 µm, most particularly greater than or equal to 2.8 µm, in a privileged manner greater than or equal to 2.9 µm, in a preferred privileged manner greater than or equal to 3.0 µm. Said polymer **P1** may have a particle size distribution DvlO greater than or equal to 3.1 µm, advantageously greater than or equal to 3.2 µm, preferably greater than or equal to 3.3 µm, more preferably greater than or equal to 3.4 µm, most preferably greater than or equal to 3.5 µm, in particular greater than or equal to 3.6 µm, more particularly greater than or equal to 3.7 µm, most particularly greater than or equal to 3.8 µm, in a privileged manner greater than or equal to 3.9 µm, in a preferred privileged manner greater than or equal to 4.0 µm, in a particular privileged manner greater than or equal to 4.4 µm. Said polymer **P1** may have a particle size distribution DvlO lower than or equal to 12 µm, advantageously lower than or equal to 11 µm, preferably lower than or equal to 10 µm, more preferably lower than or equal to 9 µm, most preferably lower than or equal to 8 µm , in particular lower than or equal to 7 µm.

Preferably, said polymer **P1** has a particle size distribution DvlO greater than or equal to 1.5 µm, advantageously greater than or equal to 1.6 µm, preferably greater than or equal to 1.7 µm, more preferably greater than or equal to 1.8 µm, most preferably greater than or equal to 1.9 µm, in particular greater than or equal to 2.0 µm; and said polymer **P1** has a particle size distribution Dv10 lower than or equal to 12 µm, advantageously lower than or equal to 11 µm, preferably lower than or equal to 10 µm, more preferably lower than or equal to 9 µm, most preferably lower than or equal to 8 µm, in particular lower than or equal to 7 µm.

Preferably, said polymer **P1** has a particle size distribution DvlO greater than or equal to 2.0 µm, advantageously greater than or equal to 2.1 µm, preferably greater than or equal to 2.2 µm, more preferably greater than or equal to 2.3 µm, most preferably greater than or equal to 2.4 µm, in particular greater than or equal to 2.5 µm, more particularly greater than or equal to 2,6 µm, most particularly greater than or equal to 2.7 µm, in a privileged manner greater than or equal to 2.8 µm, in a preferred privileged manner greater than or equal to 2.9 µm, in a particular privileged manner greater than or equal to 3.0 µm; and said polymer **P1** has a particle size distribution DvlO lower than or equal to 12 µm, advantageously lower than or equal to 11 µm, preferably lower than or equal to 10 µm, more preferably lower than or equal to 9 µm, most preferably lower than or equal to 8 µm , in particular lower than or equal to 7 µm.

Preferably, said polymer **P1** has a particle size distribution DvlO greater than or equal to 3.1 µm, advantageously greater than or equal to 3.2 µm, preferably greater than or equal to 3.3 µm, more preferably greater than or equal to 3.4 µm, most preferably greater than or equal to 3.5 µm, in particular greater than or equal to 3.6 µm, more particularly greater than or equal to 3.7 µm, most particularly greater than or equal to 3.8 µm, in a privileged manner greater than or equal to 3.9 µm, in a preferred privileged manner greater than or equal to 4.0 µm, in a particular privileged manner greater than or equal to 4.4 µm; and said polymer **P1** has a particle size distribution DvlO lower than or equal to 12 µm, advantageously lower than or equal to 11 µm, preferably lower than or equal to 10 µm, more preferably lower than or equal to 9 µm, most preferably lower than or equal to 8 µm , in particular lower than or equal to 7 µm.

Said polymer **P1** may also have a Dv90 particle size distribution of lower than 50 µm. The Dv90 is the particle size at the 90th percentile (by volume) of the cumulative particle size distribution. This parameter can be determined according to the method disclosed in the present application. This applies to all Dv90s described in the present application. Advantageously, said polymer **P1** has a particle size distribution Dv90 lower than or equal to 48 µm, preferably lower than or equal to 46 µm, more preferably lower than or equal to 44 µm, most preferably lower than or equal to 42 µm, in particular lower than or equal to 40 µm, more particularly lower than or equal to 38 µm, most particularly lower than or equal to 36 µm, in a privileged manner lower than or equal to 34 µm, in a preferred privileged manner lower than or equal to 32 µm, in a particular privileged manner lower than or equal to 30 µm. Said polymer **P1** may have a particle size distribution Dv90 greater than or equal to 1 µm , advantageously greater than or equal to 2 µm , preferably greater than or equal to 3 µm, more preferably greater than or equal to 4 µm, most preferably greater than or equal to 5 µm, in particular greater than or equal to 6 µm, more particularly greater than or equal to 7 µm, most particularly greater than or equal to 8 µm, in a privileged manner greater than or equal to 9 µm, in a preferred privileged manner greater than or equal to 10 µm.

Said polymer **P1** has a particle size distribution Dv90 lower than or equal to 50 µm, advantageously lower than or equal to 48 µm, preferably lower than or equal to 46 µm, more preferably lower than or equal to 44 µm, most preferably lower than or equal to 42 µm, in particular lower than or equal to 40 µm, more particularly lower than or equal to 38 µm, most particularly lower than or equal to 36 µm, in a privileged manner lower than or equal to 34 µm, in a preferred privileged manner lower than or equal to 32 µm, in a particular privileged manner lower than or equal to 30 µm; and said polymer **P1** has a particle size distribution Dv90 greater than or equal to 1 µm , advantageously greater than or equal to 2 µm , preferably greater than or equal to 3 µm, more preferably greater than or equal to 4 µm, most preferably greater than or equal to 5 µm, in particular greater than or equal to 6 µm, more particularly greater than or equal to 7 µm, most particularly greater than or equal to 8 µm, in a privileged manner greater than or equal to 9 µm, in a preferred privileged manner greater than or equal to 10 µm.

According to a preferred embodiment, the said polymer **P1** has a particle size distribution:
- Dv99 lower than or equal to 89 µm, advantageously lower than or equal to 85 µm, preferably lower than or equal to 80 µm, more preferably lower than or equal to 75 µm, most preferably lower than or equal to 70 µm, in particular lower than or equal to 65 µm, more particularly lower than or equal to 60 µm, most particularly lower than or equal to 55 µm, in a privileged manner lower than or equal to 50 µm, in a preferred privileged manner lower than or equal to 45 µm;
- DvlO greater than or equal to 1.5 µm, or greater than or equal to 1.6 µm, or greater than or equal to 1.7µm, or greater than or equal to 1.8µm, or greater than or equal to 1.9 µm, or greater than or equal to 2.0 µm, advantageously greater than or equal to 2.1 µm, preferably greater than or equal to 2.2 µm, more preferably greater than or equal to 2.3 µm, most preferably greater than or equal to 2.4 µm, in particular greater than or equal to 2.5 µm, more particularly greater than or equal to 2.6 µm, most particularly greater than or equal to 2.7 µm, in a privileged manner greater than or equal to 2,8 µm, in a preferred privileged manner greater than or equal to 2,9 µm, in a particular privileged manner greater than or equal to 3,0 µm or DvlO greater than or equal to 3,1 µm, advantageously greater than or equal to 3,2 µm, preferably greater than or equal to 3,3 µm, more preferably greater than or equal to 3,4 µm, most preferably greater than or equal to 3.5 µm, in particular greater than or equal to 3.6 µm, more particularly greater than or equal to 3.7 µm, most particularly greater than or equal to 3.8 µm, in a privileged manner greater than or equal to 3.9 µm, in a preferred privileged manner greater than or equal to 4.0 µm, in a particular privileged manner greater than or equal to 4.4 µm; and
- Dv90 lower than or equal to 50 µm, advantageously lower than or equal to 48 µm, preferably lower than or equal to 46 µm, more preferably lower than or equal to 44 µm, most preferably lower than or equal to 42 µm, in particular lower than or equal to 40 µm, more particularly lower than or equal to 38 µm, most particularly lower than or equal to 36 µm, in a privileged manner lower than or equal to 34 µm, in a preferred privileged manner lower than or equal to 32 µm, in a particular privileged manner lower than or equal to 30 µm.

According to another preferred embodiment, the said polymer **P1** has a particle size distribution:
- Dv99 lower than or equal to 89 µm, advantageously lower than or equal to 85 µm, preferably lower than or equal to 80 µm, more preferably lower than or equal to 75 µm, most preferably lower than or equal to 70 µm, in particular lower than or equal to 65 µm, more particularly lower than or equal to 60 µm, most particularly lower than or equal to 55 µm, in a privileged manner lower than or equal to 50 µm, in a preferred privileged manner lower than or equal to 45 µm; and greater than or equal to 5 µm, advantageously greater than or equal to 7 µm, preferably greater than or equal to 9 µm, more preferably greater than or equal to 11 µm, most preferably greater than or equal to 13 µm, in particular greater than or equal to 15 µm, more particularly greater than or equal to 17 µm, most particularly greater than or equal to 19 µm, in a privileged manner greater than or equal to 20 µm, in a preferred privileged manner greater than or equal to 24 µm ;
- DvlO greater than or equal to 1.5 µm, or greater than or equal to 1.6 µm, or greater than or equal to 1.7µm, or greater than or equal to 1.8µm, or greater than or equal to 1.9 µm, or greater than or equal to 2.0 µm, advantageously greater than or equal to 2.1 µm, preferably greater than or equal to 2.2 µm, more preferably greater than or equal to 2.3 µm, most preferably greater than or equal to 2.4 µm, in particular greater than or equal to 2.5 µm, more particularly greater than or equal to 2.6 µm, most particularly greater than or equal to 2.7 µm, in a privileged manner greater than or equal to 2.8 µm, in a preferred privileged manner greater than or equal to 2.9 µm, in a particular privileged manner greater than or equal to 3.0 µm or DvlO greater than or equal to 3.1 µm, advantageously greater than or equal to 3.2 µm, preferably greater than or equal to 3.3 µm, more preferably greater than or equal to 3.4 µm, most preferably greater than or equal to 3.5 µm, in particular greater than or equal to 3.6 µm, more particularly greater than or equal to 3.7 µm, most particularly greater than or equal to 3.8 µm, in a privileged manner greater than or equal to 3.9 µm, in a preferred privileged manner greater than or equal to 4.0 µm; and lower than or equal to 12 µm, advantageously lower than or equal to 11 µm, preferably lower than or equal to 10 µm, more preferably lower than or equal to 9 µm, most preferably lower than or equal to 8 µm, in particular lower than or equal to 7 µm ;
- Dv90 lower than or equal to 50 µm, advantageously lower than or equal to 48 µm, preferably lower than or equal to 46 µm, more preferably lower than or equal to 44 µm, most preferably lower than or equal to 42 µm, in particular lower than or equal to 40 µm, more particularly lower than or equal to 38 µm, most particularly lower than or equal to 36 µm, in a privileged manner lower than or equal to 34 µm, in a preferred privileged manner lower than or equal to 32 µm, in a particular privileged manner lower than or equal to 30 µm; and greater than or equal to 1 µm, advantageously greater than or equal to 2 µm , preferably greater than or equal to 3 µm, more preferably greater than or equal to 4 µm, most preferably greater than or equal to 5 µm, in particular greater than or equal to 6 µm, more particularly greater than or equal to 7 µm, most particularly greater than or equal to 8 µm, in a privileged manner greater than or equal to 9 µm, in a preferred privileged manner greater than or equal to 10 µm.

According to a preferred embodiment, the melt viscosity of said polymer **P1** ranges from 15 kP to 50 kP at 230°C and a shear rate of 100 s-1 measured according to ASTM D3835. Advantageously, the melt viscosity of said polymer **P1** ranges from 16 kP to 45 kP, preferably ranges from 17 kP to 40 kP, more preferably ranges from 18 kP to 35 kP, most preferably from 19 kP to 30 kP at 230°C and a shear rate of 100 s⁻¹ measured according to ASTM D3835.

Preferably, the mass ratio between the extractible and the weight content of said monomer **M1** in said polymer **P1** based on the total weight thereof, both expressed as a percentage, is lower than 2.0, advantageously lower than 1.8, preferably lower than 1.6, more preferably lower than 1.4, most preferably lower than 1.2, in particular lower than 1.0, more particularly lower than 0.8. A low ratio indicates that the polymer according to the invention minimizes battery operating problems linked to the dissolution of polymer chains at the separator and their displacement from the separator to other battery elements, for example to the electrode.

As mentioned above, said polymer **P1** has a particular melting temperature profile. Said polymer P1 has a melting temperature greater than 163.04 - 1.9628*x wherein x is the weight content of the monomer M1 in said polymer, expressed as a percentage. The specific selection of these polymers **P1** fulfilling the requirement of the relationship disclosed above allows the improvement of the dry adhesion while maintaining a moderate Gurley as shown in the examples below. Preferably, said polymer **P1** has a melting temperature Tm greater than 164.04 - 1.9628*x, advantageously greater than 165.04 - 1.9628*x, preferably greater than 166.04 - 1.9628*x, more preferably greater than 167.04 - 1.9628*x, most preferably greater than 168.04 - 1.9628*x, in particular greater than 169.04 - 1.9628*x, more particularly greater than 170.04 - 1.9628*x.

### Composition

Preferably, said composition according to the present invention comprises at least 50%, preferably at least 60%, preferably at least 70%, more preferably at least 80%, in particular at least 90%, more particularly at least 95% by weight of said polymer **P1** according to the present invention based on the total weight of said composition. The composition may further comprise other polymers, for example based on monomers **M1** or **M2** as defined in the present invention.

Said polymer **P1** can be obtained by an emulsion or suspension polymerization process according to the usual techniques known to those skilled in the art. The polymer **P1** is generally obtained in the form of a latex, dispersion or aqueous solution. The composition according to the present invention can be obtained from a latex comprising said polymer **P1** by a drying step followed by a step to achieve the desired particle size distribution. The drying step can be carried out by atomization or co-atomization, preferably at a temperature of 100°C to 220°C or freeze-drying. The powder can also be obtained by grinding techniques, such as cryogrinding, where the mixture is brought to a temperature below room temperature, by means of liquid nitrogen for example, before grinding. At the end of the powder manufacturing step, i.e. after the drying step, the particle size can be adjusted and optimized by selection or screening processes and/or by grinding, granulation, sieving, compaction, or shearing. One or more of these techniques can be used to achieve the desired size distribution.

### Separator

Said composition according to the present invention can be used as one of the materials used for the preparation of a separator in an electrochemical device. The electrochemical device is selected from the group: Li-ion secondary battery, capacitor, double layer electric capacitor, and membrane electrode assembly (AME) for fuel cell, preferably Li-ion secondary battery. Said composition is preferably used as an adhesive layer **AL** of the separator in contact with the electrode.

The separator may therefore contain a porous support **S** and a coating layer **CL** disposed on at least one face of the porous support and an adhesive layer **AL** applied on said coating layer **CL.** During the production of a battery, the separator and the electrode are placed on top of each other, and low-temperature pressure is applied to the assembly to allow the two elements to stick together. This is made possible by the adhesive layer containing the composition according to the present invention. Indeed, thanks to this composition forming the adhesive layer and the specific choice of polymers constituting this adhesive layer, the separator can strongly adhere to the electrode and prevent subsequent degradation in the battery.

Said coating layer **CL** usually contains a binder and inorganic particles that serve to form micropores in the coating (the gaps between inorganic particles). The addition of inorganic particles can also contribute to heat resistance or improve wettability. According to one embodiment, said coating comprises from 50 to 99 wt% of inorganic particles, relative to the weight of the coating. These inorganic particles must be electrochemically stable (not subject to oxidation and/or reduction in the range of voltages used). In addition, powdery inorganic materials preferably have high ionic conductivity. Low-density materials are preferred over higher-density materials, as the weight of the battery produced can be reduced. The dielectric constant is preferably equal to or greater than 5. According to one embodiment, said inorganic particles are selected from the group consisting of: BaTiO₃, Pb(Zr,Ti)O₃, Pb₁₋ₓLaₓZr_{y}O₃ (0<x<1, 0<y<1), PbMg₃Nb_{2/3}O₃, PbTiO₃, HfO, HfO₂, SrTiO₃, SnO₂, CeO₂, MgO, NiO, CaO, ZnO, Y₂O₃, bohemite (y-AlO (OH)), Al₂O₃, TiO₂, SiC, ZrO₂, boron silicate, BaSO₄, nanoclays, or mixtures thereof. Preferably said coating may comprise from 0.5 to 40wt% of the binder and from 60 to 99.5wt% of inorganic particles. The coating of the separator may optionally comprise from 0 to 15 wt% based on the weight of the binder, and preferably 0.1 to 10wt%, of additives, selected from thickeners, pH adjusting agents, anti-sedimentation agents, surfactants, wetting agents, fillers, anti-foaming agents and promoters of fugitive adhesion or not. The fillers mentioned here in the additives are different from the inorganic particles mentioned above. There is no limitation on the components used as binder in the coating layer; and the binder can be based on fluoropolymers such polyvinylidene fluoride, polyacrylamide, polyacrylonitrile, ABS or SBS rubber, copolymer of vinylidene fluoride and hexafluoropropene and/or acrylic-based polymers. There is no particular limitation in the choice of the support which is coated with the coating layer CL, as long as it is a porous substrate having pores. The porous support can take the form of a membrane or fibrous tissue. When the porous support is fibrous, it may be a non-woven veil forming a porous veil, such as a veil obtained by direct spinning or melt-blowing (type "spunbond" or "melt blown") or electro-spinning. Examples of porous support useful in the invention as a carrier include, but are not limited to: polyolefins, polyethylene terephthalate, polybutylene terephthalate, polyester, polyacetal, polyamide, polycarbonate, polyimide, polyetheretherketone, polyether sulfone, poly(phenylene oxide), poly(phenylene sulfide), polyethylene naphthalene or mixtures thereof. However, other heat-resistant engineering plastics can be used without any particular limitation. Non-woven materials made of natural and synthetic materials can also be used as a substrate for the separator. The porous support is generally 1 to 50 µm thick and is typically membrane obtained by extrusion and drawing (wet or dry processes) or nonwoven castings. The porous support preferably has a porosity between 5% and 95%. The average pore size (diameter) is preferably between 0.001 and 50 microns, preferably between 0.01 and 10 microns.

The separator coating of the invention has an excellent compromise between dry adhesion, good resistance to the electrolyte solvent (s) characterized by good integrity preserved and moderate swelling.

### Battery

In another aspect of the present invention, a Li-ion secondary battery is provided. Said battery comprises the separator according to the present invention, a positive electrode and a negative electrode.

The electrode comprises a binder, an active material and optionally a conductive agent.

In a preferred embodiment, the electrode has the following mass composition:
a. 50 % to 99.95 % active material, preferably 50 % to 99 %,
b. 25 % to 0 % conductive agent, preferably 25 % to 0.5 %,
c. 25 % to 0.05 % of a binder, preferably 25 % to 0.5 %,
d. 0 % to 5 % at least one additive selected from the group consisting of a plasticizer, an ionic liquid, a dispersing agent for conductive additive, and an auxiliary flow agent; the sum of all these percentages being 100%.

There is no limitation on the components used as binder in the electrode; and the binder can be based on fluoropolymers such polyvinylidene fluoride, polyacrylamide, polyacrylonitrile, ABS or SBS rubber, acrylic-based polymers, copolymers of vinylidene fluoride and a hydrophilic monomer such as acrylic acid, carboxyethylacrylate, hydroxyethyl acrylate, hydroethylmethacrylate or acryloyloxyethyl succinate.

The conductive agents in the electrode are composed of one or more materials that can improve conductivity. Some examples include carbon blacks such as acetylene black, Ketjen black; carbon fibers, such as a carbon nanotube, a carbon nanofiber, a carbon fiber by vapor growth; metal powders such as SUS powder, and aluminum powder.

Active materials are materials that are able to store and release lithium ions. In a preferred embodiment, said electrode is a negative electrode. In particular, for a negative electrode, said active material is selected from the group consisting of a lithium alloy, a metal oxide, a carbon material such as graphite or hard carbon, silicon, a silicon alloy and Li₄Ti₅O₁₂. The shape of the negative electrode active material is not particularly limited but is preferably particulate. In another preferred embodiment, said electrode is a positive electrode. Preferably, for a cathode, said active material is selected from the group consisting of LiCoO₂, Li (Ni,Co,Al)O₂, Li₍ᵢ₊ₓ₎NiₐMn_{b}Co_{c} (x represents a real number of 0 or more, a = 0.8, 0.6, 0.5, or 1/3, b = 0.1, 0.2, 0.3, or 1/3, c = 0.1, 0.2, or 1/3), LiNiO₂, LiMn₂O₄, LiCoMnO₄, Li₃NiMn₃O₃, Li₃Fe₂(PO₄)₃, Li₃V₂(PO₄)₃, a spinel Li Mn substituted by a different element having a composition represented by Li₁₊ₓMn_{2-x-y}M_{y}O₄, M representing at least one metal selected from Al, Mg, Co, Fe, Ni, and Zn, x and y independently representing a real number between 0 and 2, lithium titanate LiₓTiO_{y} - x and y independently representing a real number between 0 and 2, and a metal and lithium phosphate having a composition represented by LiMPO₄, M representing Fe, Mn, Co, or Ni. In addition, the surface of each of the materials described above can be coated. The coating material is not particularly limited as long as it has lithium-ion conductivity and contains a material that can be held as a coating layer on the surface of the active material. Examples of the coating material include LiNbO₃, Li₄Ti₅O₁₂, and Li₃PO₄. The shape of the cathode active material is not particularly limited but is preferably particulate. Said electrode may be prepared by a process with or without solvent according to known processes.

### Examples

Several copolymers of vinylidene fluoride and hexafluoropropene were tested. The content in hexafluoropropene, melting, temperature, melt viscosity and particle size distribution of each sample is detailed below in Table 1.

**[Table 1]**

| | % HFP¹ | Tm (°C) | Melt viscosity² (kP) | Dv10 (µm) | Dv90 (µm) | Dv99 (µm) |
|---|---|---|---|---|---|---|
| A1 (invention) | 5.5 | 165.1 | 20.0 | 5.4 | 12.4 | 20.3 |
| A2 (invention) | 6.9 | 165.0 | 22.5 | 6.7 | 19.8 | 35.4 |
| A3 (invention) | 9.3 | 164.0 | 23.5 | 7.8 | 29.9 | 62.5 |
| B1 (comparative) | 4.7 | 153.8 | 35.8 | 4.25 | 16.7 | 42.5 |
| B2 (comparative) | 10.0 | 142.3 | 15.9 | 4.74 | 13.62 | 29.88 |

| | | | | | | |
|---|---|---|---|---|---|---|
| *¹ measured by NMR*//*² measured at shear rate 100s⁻¹ and 230°C* | | | | | | |

From these three samples in powder form, separator coatings were prepared according to the protocol below. For each of the coatings, adhesion and Gurley value were measured.

### Preparation of redispersed powder compositions

The dispersant (BYK-21486, 2.5g), defoamer (BYK 018, 2.5g) and samples in powder form (120g) are added to a CMC solution (Nippon Paper FT-32, 6.2 g in 850g of deionized water) under dispermill mixer agitation of 500 rpm. Then the powder is dispersed and optionally deagglomerated using a dispermill mixer operated at 1500 rpm for 0.5 h. The dispersion is then pump into beads milling system (1.6kg, zirconia beads of 0.6-0.8 mm diameter) for 25 min milling until average particle size lower than 3 µm , added a binder (BYK-LPC-22346, 10g) and a wetting agent (BYK-LPX-20990, 3.2g), then homogenized with an agitation at 500 rpm for 30min.

### Particle size distribution measurement

The specific diameters of the particles DvlO, Dv90, Dv99 represent volume mean values of the diameter at 10%, 90%, 99% respectively of the cumulative volume in the particle size distribution, measured with Microtrac S3500 bluewave and using water as a dispersion medium. The analysis can be done directly for redispersed powder compositions. To analyze the powder, the following protocol is followed: 0.5g of powder is placed in a 100mL jar with 2mL of surfactant (10% Triton X-100) and 60mL of demineralized water. The mixture is stirred with a magnetic bar for 10 min at 200rpm and then for 5 min in the ultrasonic tank (160W). The mixture is analyzed with a microtrac S3500 bluewave particle size analyzer in wet mode.

### Separator coating

This formulation is then applied to a ND12 PE separator using a bar coater equipped with a 50 µm wet thickness and at a speed of 30 mm/s. The coated separator is dried at 60°C for 5min.

### Dry adhesion

Three samples of separators per polymer are assembled with their coated face in contact with electrodes using a plate-to-plate press operated at 25°C, 3MPa with the following pressing conditions: 1 min pre-pressing to increase the pressure to 3 MPa, 2 min maintaining the pressure at 3 MPa, and 1 min pressure releasing. In this assembly, we cut coated separator and electrodes to strips of 2.25*10 cm and place in pressor. After pressing, electrode side is then glued on an aluminum plate (3x10cm) with a double-sided tape. At one end of the sample, the coated separator is peeled off in 180° direction by Instron tensile tester at 50mm/min speed. The adhesion force of each polymer was calculated with the average of 3 samples.

### Swelling ratio measurement

Thin film samples for swelling test were prepared by solvent casting. Polymer powders was dissolved in NMP under mechanical mixing to have a 15wt% of solution. Leave the solution overnight and cast on a glass plate using a coating blade with a gap of 2 mm. The film was then dried in a 120 °C oven for about 2 hours. The dried film was then cut into 2cm*3cm samples. Film samples were then immersed in commercial electrolyte containing 1M of LiPF6 and place it in a pre-heated oven at the 70 °C for 7 days. At least 3 samples for each polymer were tested in parallel. After 7 days, the samples were removed from electrolyte, wiped the surface dry with filter paper, and weigh the weight (W1). The weighed sample was dipped into dimethyl carbonate (DMC) for two hours and dry at 120°C until the mass no longer changes, then weigh the weight (W2). The swelling ratio is determined by the following formula:
Swelling ratio% (based on final weight): ((W1 - W2) / W2)*100

The swelling ratio of each polymer was calculated with the average of 3 samples.

The results are presented in Table 2 below.

**[Table 2]**

| | Dry Adhesion (N/m) | Swelling ratio (%) |
|---|---|---|
| A1 (invention) | 1.46 | 47.1 |
| A2 (invention) | 1.6 | 50.2 |
| A3 (invention) | 1.38 | 56.0 |
| B1 (comparative) | 0.61 | 34.1 |
| B2 (comparative) | 0.99 | 344.4 |

As demonstrated by the examples above, the use of a composition according to the present invention makes it possible to obtain a better adhesion while maintaining an acceptable ionic conductivity for the targeted applications. The selection of a polymer having a particular particle size distribution and a specific melting temperature as mentioned in the present invention has a significant advantage over a polymer whose size distribution is too high or too heterogeneous and lower melting temperature.

## Claims

1. Composition in powder form comprising a polymer **P1** comprising recurring units derived from vinylidene fluoride and recurring units derived from a monomer **M1** selected from the group consisting of vinylidene fluoride, hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)nCH₂OCF=CF₂ wherein n is 1, 2, 3, 4 or 5; a monomer of formula R¹CH₂OCF=CF₂ wherein R¹ is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluoromethyl-3,3,3-trifluoro-1-propene or mixture thereof; **characterized in that** the particles of said polymer **P1** have a Dv99 size distribution lower than 89 microns and a DvlO size distribution greater than 1.5 microns and **in that** said polymer **P1** has a melting temperature Tm greater than 163.04 - 1.9628*x ; wherein x is the weight content of said fluorinated monomer **M1** expressed as percent based on the total weight of said polymer **P1;** the melting temperature being measured by DSC according to the ASTM E794-06 (2018) standard test method.

2. A composition according to the preceding claim **characterized in that** said monomer **M1** is hexafluoropropylene.

3. A composition according to any one of the preceding claims **characterized in that** the mass content of said monomer **M1** in said polymer **P1** is between 1% and 16% based on the total weight of said polymer **P1.**

4. A composition according to any one of the preceding claims **characterized in that** said polymer **P1** has a melting temperature Tm greater than 164.04 - 1.9628*x, advantageously greater than 165.04 - 1.9628*x, preferably greater than 166.04 - 1.9628*x, in particular greater than 167.04 - 1.9628*x.

5. A composition according to any one of the preceding claims **characterized in that** the melt viscosity of said polymer **P1** ranges from 16 to 50 kP at 230°C and a shear rate of 100 s-1 measured according to ASTM D3835.

6. A composition according to any one of the preceding claims **characterized in that** said polymer **P1** comprises a functional group selected from the group consisting of carboxylic acid, carboxylic acid anhydride, carboxylic acid esters, epoxy groups, amide, hydroxyl, carbonyl, mercapto, sulfide, oxazoline, phenolics, ester, ether, siloxane, sulfonic, sulfuric, phosphoric, or phosphonic.

7. Composition according to any one of the preceding claims **characterized in that** said polymer **P1** further comprises recurring units derived from a monomer **M2** of formula R¹R²C=C(R³)((X¹)ₚC(O)R⁴) wherein the substituents R¹, R² and R³ are independently selected from the group consisting of H, CO₂H et C₁-C₅ alkyl ; R⁴ is selected from the group consisting of -NHC(CH₃)₂CH₂C(O)CH₃ and -OR⁵ wherein R⁵ is selected from the group consisting of H and C₁-C₁₈ alkyl optionally substituted by one or more functional groups -OH, -CO₂H, -SO₃H, -PO₃H, -OC(O)R⁶, -C(O)O-R⁶ or a heterocycle having five or six membered ring comprising at least one nitrogen atom in the backbone ; R⁶ being selected from the group consisting of C₁-C₆ alkyl and C₆-C₁₂ aryl optionally substituted by one or more functional groups -OH, -CO₂H, -SO₃H, -PO₃H ; p is 0 or 1; X¹ is selected from the group consisting of -[-C(O)OC(R⁷)(R⁸)C(R⁹)(R¹⁰)-]_{w1}- and C₁-C₁₀ alkyl optionally substituted by one or more functional groups -OH, -CO₂H or ester(s) ; w1 is an integer of from 1 to 50, advantageously from 1 to 25, preferably from 1 to 10, in particular from 1 to 5 ; R⁷, R⁸, R⁹, R¹⁰ are independently from each other and independently for each unit w1 selected from the group consisting of H and C₁-C₅ alkyl.

8. A composition according to any one of the preceding claims **characterized in that** the particles of said polymer **P1** have a distribution of size Dv90 lower than 50 microns.

9. A composition according to any one of the preceding claims **characterized in that** the mass ratio between the extractible and the content of said monomer **M1** in said polymer **P1,** both expressed as a percentage, is lower than 2.0.

10. A composition according to any preceding claim **characterized in that** said polymer P1 is free of fluorosurfactants.

11. Separator for electrochemical device comprising the composition according to any one of the preceding claims 1 to 10.

12. Separator according to the previous claim wherein the separator comprises a porous support, a coating layer **CL** disposed on the support and an adhesive layer **AL** disposed on said coating layer CL; said adhesive layer **AL** being constituted of the composition according to any one of the preceding claims 1 to 10.

13. Li-ion secondary battery comprising a negative electrode, a positive electrode and a separator, wherein said separator is according to the preceding claim.
